# EUROPÄISCHE PATENTSCHRIFT

(11) **EP 4 070 294 B1**
(45) Veröffentlichungstag und Bekanntmachung des Hinweises auf die Patenterteilung: **16.10.2024**
(21) Anmeldenummer: 20807664.6
(22) Anmeldetag: 09.11.2020
(51) Int. Cl.: G07D 7/12, G07D 7/20, G07D 7/2033, G07D 7/206, G07D 11/30, G06V 30/414, G06V 30/12

(54) **VORRICHTUNG UND VERFAHREN ZUR BEARBEITUNG VON WERTDOKUMENTEN, INSBESONDERE BANKNOTEN, SOWIE WERTDOKUMENTBEARBEITUNGSSYSTEM**
DEVICE AND METHOD FOR PROCESSING VALUE DOCUMENTS, MORE PARTICULARLY BANK NOTES, AND VALUE DOCUMENT PROCESSING SYSTEM
DISPOSITIF ET PROCÉDÉ POUR TRAITER DES DOCUMENTS DE VALEUR, PLUS PARTICULIÈREMENT DES BILLETS DE BANQUE, ET SYSTÈME DE TRAITEMENT DE DOCUMENTS DE VALEUR

(30) Priorität: 06.12.2019 DE 102019008513
(43) Veröffentlichungstag der Anmeldung: 12.10.2022
(73) Patentinhaber: Giesecke+Devrient Currency Technology GmbH, 81677 München (DE)
(72) Erfinder: DERKS, Hendrik, 82538 Geretsried (DE); HANUSSEK, Marja, 81927 München (DE)
(74) Vertreter: Giesecke+Devrient IP
(86) Internationale Anmeldenummer: PCT/EP2020/025501
(87) Internationale Veröffentlichungsnummer: WO 2021/110284

(56) Entgegenhaltungen:
- WO-A1-2019/202715
- DE-A1- 102004 049 209
- US-A1- 2011 170 761

## Beschreibung

Die Erfindung betrifft eine Vorrichtung und ein Verfahren zur Bearbeitung von Wertdokumenten, insbesondere Banknoten, sowie ein Wertdokumentbearbeitungssystem.

Bei der Bearbeitung von Banknoten in Banknotenbearbeitungssystemen werden Banknoten mithilfe von Sensoren beispielsweise bezüglich Echtheit, Verschmutzung, Beschädigung, Stückelung usw. geprüft und entsprechend sortiert. Häufig werden dabei auch auf den Banknoten aufgedruckte Seriennummern ermittelt und für den Bearbeitungsprozess und/oder andere Vorgänge verwendet, um z.B. eine Rückverfolgung der Banknoten zu ermöglichen. Dies setzt voraus, dass die Seriennummern richtig erkannt werden, was jedoch etwa bei Verschmutzungen und/oder Beschädigungen im Bereich der aufgedruckten Seriennummer nicht immer gewährleistet werden kann. DE 10 2004 049209 A1 offenbart eine Vorrichtung zur Bearbeitung von Wertdokumenten. Dabei wird die Seriennummer der Wertdokumente gelesen und zusammen mit zusätzlichen Informationen abgespeichert. Falls es nicht möglich ist die Seriennummer zu lesen wird ein Bildausschnitt gespeichert, welcher die entsprechenden Rohdaten (Seriennummer) auf dem Wertdokument zeigt.

US 2011/0170761 A1 offenbart eine Vorrichtung zur Bearbeitung von Wertdokumenten. Eine mehrfach auf dem Wertdokument vorhandene Seriennummer wird gelesen und für den Fall, dass einzelne Zeichen in einer der Seriennummern unlesbar, in einer anderen jedoch lesbar sind, aus den Zeichen mehrerer Seriennummern zusammengesetzt.

WO 2019/202715 A1 offenbart eine ähnliche Vorrichtung. Es werden jedoch Seriennummern zusammengeführt, welche in unterschiedlicher Art auf dem Wertdokument vorliegen, also z.B. eine gedruckte Seriennummer und eine magnetisch aufgebrachte Seriennummer.

Es ist eine Aufgabe der Erfindung, eine Vorrichtung und ein Verfahren zur Bearbeitung von Wertdokumenten sowie ein Wertdokumentbearbeitungssystem anzugeben, welche bzw. welches eine zuverlässigere Erkennung von auf den Wertdokumenten befindlichen Zeichenfolgen, insbesondere Seriennummern, ermöglicht.

Diese Aufgabe wird durch eine Vorrichtung und ein Verfahren gemäß den unabhängigen Ansprüchen sowie ein Wertdokumentbearbeitungssystem mit einer solchen Vorrichtung gelöst.

Eine Vorrichtung zur Bearbeitung von Wertdokumenten, insbesondere Banknoten, gemäß einem ersten Aspekt der Erfindung weist auf: mindestens eine Bilderfassungseinrichtung, welche dazu eingerichtet ist, mindestens ein Bild von mindestens zwei auf einem Wertdokument befindlichen Zeichenfolgen zu erfassen, und eine Auswertungseinrichtung, welche dazu eingerichtet ist, in dem mindestens einen Bild ein oder mehrere erste Zeichen, die in mindestens einer ersten Zeichenfolge enthalten sind, und ein oder mehrere zweite Zeichen, die in mindestens einer zweiten Zeichenfolge enthalten sind, zu erkennen, aus zumindest einem Teil der ersten Zeichen und zumindest einem Teil der zweiten Zeichen eine zusammengesetzte Zeichenfolge zu bilden und Bildausschnitte aus dem mindestens einen Bild, in welchen die in der zusammengesetzten Zeichenfolge enthaltenen ersten bzw. zweiten Zeichen wiedergegeben und die für die Bildung der zusammengesetzten Zeichenfolge verwendet werden, zusammen mit der zusammengesetzten Zeichenfolge in einer Speichereinrichtung zu speichern.

Ein Wertdokumentbearbeitungssystem gemäß einem zweiten Aspekt der Erfindung weist mindestens eine Vorrichtung zum Vereinzeln und/ oder Befördern und/ oder Zählen und/ oder Prüfen und/ oder Sortieren von Wertdokumenten, insbesondere Banknoten, und eine Vorrichtung gemäß dem ersten Aspekt der Erfindung auf.

Ein Verfahren zur Bearbeitung von Wertdokumenten, insbesondere Banknoten, gemäß einem dritten Aspekt der Erfindung weist folgende Schritte auf: Erfassen mindestens eines Bildes von mindestens zwei auf einem Wertdokument befindlichen Zeichenfolgen; Erkennen von einem oder mehreren ersten Zeichen, die in mindestens einer ersten Zeichenfolge enthalten sind, und einem oder mehreren zweiten Zeichen, die in mindestens einer zweiten Zeichenfolge enthalten sind; Bilden einer zusammengesetzten Zeichenfolge aus zumindest einem Teil der ersten Zeichen und zumindest einem Teil der zweiten Zeichen; und Speichern von Bildausschnitten aus dem mindestens einen Bild, in welchen die in der zusammengesetzten Zeichenfolge enthaltenen ersten bzw. zweiten Zeichen wiedergegeben und die für die Bildung der zusammengesetzten Zeichenfolge (5) verwendet werden, zusammen mit der zusammengesetzten Zeichenfolge in einer Speichereinrichtung.

Aspekte der Erfindung basieren vorzugsweise auf dem Ansatz, zumindest einen Teil der in mindestens zwei auf dem Wertdokument befindlichen Zeichenfolgen, die in mindestens einem aufgenommenen Bild des Wertdokuments wiedergegeben werden, enthaltenen Zeichen zu erkennen, beispielsweise mittels automatischer Texterkennung bzw. optischer Zeichenerkennung (OCR), und aus zumindest einem Teil der jeweils erkannten Zeichen eine zusammengesetzte Zeichenfolge zu bilden. Die zusammengesetzte Zeichenfolge wird dann zusammen mit denjenigen Bildausschnitten des aufgenommenen Bildes gespeichert, in welchen diejenigen Zeichen wiedergegeben werden, aus denen die zusammengesetzte Zeichenfolge gebildet wurde.

Dadurch wird insbesondere erreicht, dass bei einer zu einem späteren Zeitpunkt gegebenenfalls durchgeführten Überprüfung der zusammengesetzten Zeichenfolge diejenigen Bildausschnitte des mindestens einen aufgenommenen Bildes vorliegen, welche für die Erkennung der in der zusammengesetzten Zeichenfolge enthaltenen Zeichen verwendet wurden bzw. anhand welcher die in der zusammengesetzten Zeichenfolge enthaltenen Zeichen erkannt wurden. Eine solche Überprüfung kann z.B. stichprobenartig vorgenommen werden und/oder angezeigt sein, wenn sich z.B. ergibt, dass die für ein Wertdokument ermittelte zusammengesetzte Zeichenfolge nicht korrekt ist oder sein kann. Eine Bedienperson kann dann die zusammen mit der betreffenden zusammengesetzten Zeichenfolge gespeicherten Bildausschnitte abrufen und z.B. visuell auf Übereinstimmung mit der gespeicherten zusammengesetzten Zeichenfolge überprüfen und Letztere ggf. entsprechend korrigieren.

Insgesamt wird dadurch eine besonders zuverlässige Erkennung von auf den Wertdokumenten befindlichen Zeichenfolgen ermöglicht. Dies gilt insbesondere für die Erkennung von auf Wertdokumenten mehrfach bzw. redundant vorhandenen Zeichenfolgen, wie dies häufig bei Seriennummern der Fall ist.

Vorzugsweise ist die Auswertungseinrichtung dazu eingerichtet, aus den Bildausschnitten, in welchen die in der zusammengesetzten Zeichenfolge enthaltenen ersten bzw. zweiten Zeichen wiedergegeben werden, ein Zeichenfolgenbild zu bilden und das Zeichenfolgenbild zusammen mit der zusammengesetzten Zeichenfolge in der Speichereinrichtung zu speichern. Hierbei werden also die Bildausschnitte in Form eines aus den Bildausschnitten zusammengesetzten Zeichenfolgenbildes zusammen mit der zusammengesetzten Zeichenfolge gespeichert. Die Auswertungseinrichtung ist dabei vorzugsweise dazu eingerichtet, die Bildausschnitte, in welchen die in der zusammengesetzten Zeichenfolge enthaltenen ersten bzw. zweiten Zeichen wiedergegeben werden, im Zeichenfolgenbild in einer Reihenfolge anzuordnen, welche der Reihenfolge der ersten bzw. zweiten Zeichen in der zusammengesetzten Zeichenfolge entspricht. Das aus den Bildausschnitten des Bildes bzw. der Bilder zusammengesetzte und gespeicherte Zeichenfolgenbild entspricht damit auch in der Reihenfolge der darin wiedergegebenen ersten bzw. zweiten Zeichen der ermittelten zusammengesetzten Zeichenfolge und kann, z.B. von einer Bedienperson, unmittelbar - und somit auf einfache und zuverlässige Weise - mit der gespeicherten zusammengesetzten Zeichenfolge verglichen werden.

Es ist ferner bevorzugt, dass die Auswertungseinrichtung dazu eingerichtet ist, zumindest für einen Teil der ersten Zeichen und zumindest für einen Teil der zweiten Zeichen jeweils eine Erkennbarkeitsinformation zu ermitteln, welche die Erkennbarkeit der ersten und zweiten Zeichen in dem mindestens einen Bild charakterisiert. Die Erkennbarkeitsinformation kann z.B. bei der Anwendung eines Algorithmus zur automatischen Texterkennung bzw. optischen Zeichenerkennung auf das mindestens eine aufgenommene Bild ermittelt werden und ein Maß dafür darstellen, wie gut die Zeichenfolgen gelesen bzw. erkannt werden konnten. Die die Lesbarkeit bzw. Erkennbarkeit der jeweiligen ersten und zweiten Zeichen betreffende Erkennbarkeitsinformation kann z.B. ein Zahlenwert und/ oder eine prozentuale Angabe sein und/oder zwei oder mehrere diskrete Werte (z.B. 0, 1, 2, 3, 4, 5) und/oder zwei oder mehrere qualitative Angaben (z.B. "gut", "mittel", "schlecht") aufweisen.

Vorzugsweise ist die Auswertungseinrichtung dazu eingerichtet, die zusammengesetzte Zeichenfolge aus zumindest einem Teil der ersten Zeichen und/oder zumindest einem Teil der zweiten Zeichen in Abhängigkeit von der jeweils für die ersten und zweiten Zeichen ermittelten Erkennbarkeitsinformation zu bilden. Alternativ oder zusätzlich ist die Auswertungseinrichtung dazu eingerichtet, die zusammen mit der zusammengesetzten Zeichenfolge in der Speichereinrichtung zu speichernden Bildausschnitte des mindestens einen Bildes in Abhängigkeit von der jeweils für die ersten bzw. zweiten Zeichen, aus welchen die zusammengesetzte Zeichenfolge gebildet wird bzw. wurde, ermittelten Erkennbarkeitsinformation zu ermitteln. Durch Berücksichtigung der Erkennbarkeitsinformation kann die Zuverlässigkeit bzw. Güte, mit welcher die ersten und zweiten Zeichen der ersten bzw. zweiten Zeichenfolge in dem mindestens einen Bild erkannt werden, bei der Bildung der zusammengesetzten Zeichenfolge und/ oder der Auswahl der zusammen mit der zusammengesetzten Zeichenfolge zu speichernden Bildausschnitte des mindestens einen aufgenommenen Bildes auf einfache Weise berücksichtigt werden.

Vorzugsweise kann vorgesehen sein, dass die zusammengesetzte Zeichenfolge aus ersten bzw. zweiten Zeichen gebildet wird, deren jeweilige Erkennbarkeitsinformation wenigstens ein vorgegebenes Kriterium erfüllt. So kann z.B. vorgesehen sein, dass ein erstes bzw. zweites Zeichen nur dann bei der Bildung der zusammengesetzten Zeichenfolge verwendet wird, wenn die Erkennbarkeitsinformation eine Schwelle erreicht oder überschreitet. Bei der Schwelle kann es sich z.B. um einen vorgegebenen Zahlenwert (z.B. 0,5), eine vorgegebene prozentuale Angabe (z.B. 50 %), einen vorgegebenen diskreten Wert (z.B. Wert "2" aus einer Reihe diskreter Werte zwischen "0" und "5") und/oder eine vorgegebene qualitative Angabe (z.B. "mittel") handeln.

Entsprechendes gilt alternativ oder zusätzlich für die Auswahl der zusammen mit der zusammengesetzten Zeichenfolge zu speichernden Bildausschnitte des mindestens einen aufgenommenen Bildes bzw. das aus den Bildausschnitten zusammengesetzte Zeichenfolgenbild.

Alternativ oder zusätzlich kann ferner vorgesehen sein, dass die zusammengesetzte Zeichenfolge aus ersten bzw. Zeichen gebildet wird, deren jeweilige Erkennbarkeit bzw. Lesbarkeit gemäß der ermittelten Erkennbarkeitsinformation an der betreffenden Stelle der Zeichenfolge am höchsten ist. Wird z.B. die Erkennbarkeit der Ziffer an einer ersten Stelle der ersten Zeichenfolge mit 50 % und die Erkennbarkeit der Ziffer an einer ersten Stelle der zweiten Zeichenfolge mit 70 % charakterisiert, so bildet die Ziffer an der ersten Stelle der zweiten Zeichenfolge, bei welcher es sich definitionsgemäß um eine "zweite Ziffer" handelt, die erste Stelle der zusammengesetzten Zeichenfolge. Wird z.B. die Erkennbarkeit der Ziffer an einer zweiten Stelle der ersten Zeichenfolge mit 80 % und die Erkennbarkeit der Ziffer an der zweiten Stelle der zweiten Zeichenfolge mit 40 % charakterisiert, so bildet die Ziffer an der zweiten Stelle der ersten Zeichenfolge, bei welcher es sich definitionsgemäß um eine "erste Ziffer" handelt, die zweite Stelle der zusammengesetzten Zeichenfolge usw.

Entsprechendes gilt alternativ oder zusätzlich für die Auswahl der zusammen mit der zusammengesetzten Zeichenfolge zu speichernden Bildausschnitte des mindestens einen aufgenommenen Bildes, d.h. im vorstehend erläuterten Beispiel bildet der Bildausschnitt, in welchem die Ziffer an der ersten Stelle der zweiten Zeichenfolge wiedergegeben ist, die erste Stelle des zusammengesetzten Zeichenfolgenbildes und der Bildausschnitt, in welchem die Ziffer an der zweiten Stelle der ersten Zeichenfolge wiedergegeben ist, die zweite Stelle des zusammengesetzten Zeichenfolgenbildes usw.

Vorzugsweise ist die Bilderfassungseinrichtung dazu eingerichtet ist, das mindestens eine Bild von mindestens zwei in unterschiedlichen Regionen auf einem Wertdokument befindlichen Zeichenfolgen zu erfassen. Dies ist besonders bei der Bearbeitung von Banknoten von Vorteil, deren Seriennummern an zwei oder mehreren unterschiedlichen Regionen der Banknote aufgedruckt sind.

Die Vorteile der Erfindung kommen auch dann besonders zum Tragen, wenn die erste und zweite Zeichenfolge identisch sind und die aus ersten und/ oder zweiten Zeichen der ersten bzw. zweiten Zeichenfolge gebildete zusammengesetzte Zeichenfolge mit der ersten und zweiten Zeichenfolge identisch ist. Aufgrund der redundant vorhandenen Zeichen kann die zusammengesetzte Zeichenfolge aus denjenigen ersten bzw. zweiten Zeichen zusammengesetzt werden, die bei der automatischen Zeichenerkennung am besten erkannt wurden.

Es ist daher besonders bevorzugt, dass die erste und zweite Zeichenfolge eine Seriennummer des Wertdokuments enthalten und/ oder bilden.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Wertdokumentbearbeitungssystems; und
- Fig. 2: ein Schema zur Veranschaulichung eines Beispiels für die Bildung einer zusammengesetzten Zeichenfolge und eines entsprechenden Zeichenfolgenbildes.

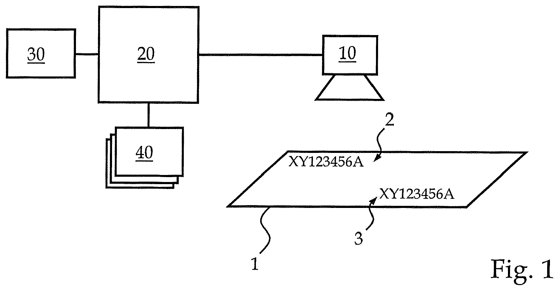

Figur 1 zeigt eine schematisierte Darstellung eines Beispiels eines Wertdokumentbearbeitungssystems mit mindestens einer Bilderfassungseinrichtung 10, welche dazu eingerichtet ist, ein oder mehrere Bilder eines zu bearbeitenden Wertdokuments 1 zu erfassen.

Die Bilderfassungseinrichtung 10 ist vorzugsweise als Kamera ausgebildet. Die Kamera kann beispielsweise als sog. Zeilenkamera oder Zeilensensor ausgebildet sein, welche bzw. welcher vom Wertdokument 1 ausgehende elektromagnetische Strahlung zeilenweise erfassen kann. Die Kamera kann aber auch als sog. Flächenkamera ausgebildet sein, welche die von zumindest einer Teilfläche des Wertdokuments 1 ausgehende Strahlung ortsaufgelöst erfassen kann.

Bei der vom Wertdokument 1 ausgehenden und von der Bilderfassungseinrichtung 10 erfassten Strahlung handelt es sich vorzugsweise um vom Wertdokument 1 remittierte, d.h. diffus reflektiere, und/oder gerichtet reflektierte Strahlung und/oder emittierte Strahlung, wie z.B. Fluoreszenz- und/oder Phosphoreszenzstrahlung. Die vom Wertdokument 1 ausgehende und/ oder erfasste Strahlung liegt vorzugsweise im sichtbaren und/ oder infraroten Spektralbereich.

Im vorliegenden Beispiel handelt es sich bei dem Wertdokument 1 um eine Banknote, die in zwei unterschiedlichen Regionen mit jeweils einer Zeichenfolge 2, 3 in Form einer Seriennummer der Banknote versehen, insbesondere bedruckt, ist.

Grundsätzlich kann das Wertdokument 1 bzw. die Banknote aber auch an mehr als zwei unterschiedlichen Regionen mit einer Zeichenfolge bzw. Seriennummer versehen sein. Die nachfolgenden Erläuterungen im Zusammenhang mit einem Wertdokument mit zwei Zeichenfolgen gelten für Wertdokumente mit mehr als zwei Zeichenfolgen daher entsprechend.

Die Bilddaten des erfassten Bildes des Wertdokuments 1 werden in einer Auswertungseinrichtung 20 mit Hilfe eines Algorithmus zur automatischen Text- bzw. optischen Zeichenerkennung (OCR) ausgewertet, um die oder zumindest einen Teil der in den Zeichenfolgen 2, 3 enthaltenen ersten bzw. zweiten Zeichen zu erkennen.

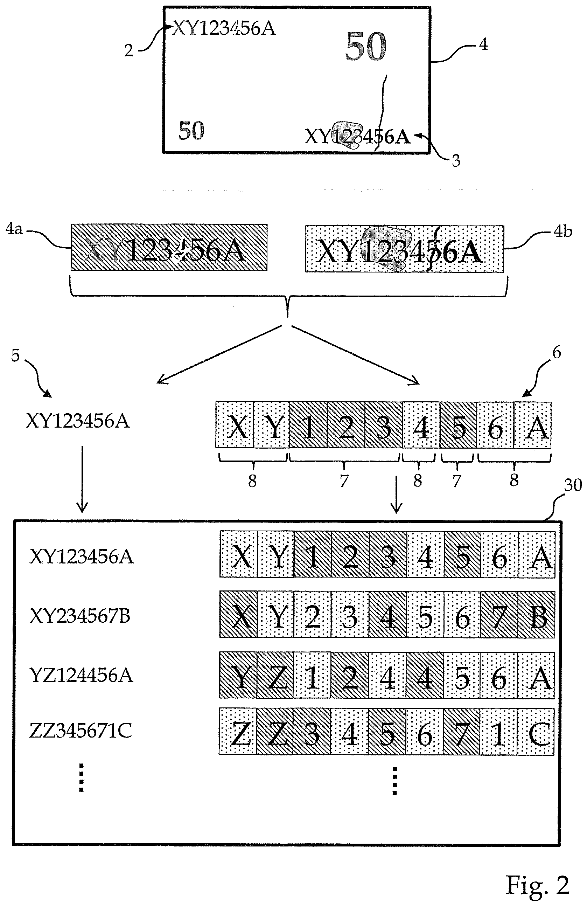

Die Auswertungseinrichtung 20 ist dazu eingerichtet, aus zumindest einem Teil der erkannten ersten Zeichen aus der ersten Zeichenfolge 2 und/ oder zumindest einem Teil der erkannten zweiten Zeichen der zweiten Zeichenfolge 3 eine zusammengesetzte Zeichenfolge zu bilden und diese zusammen mit denjenigen Bildausschnitten, in welchen die bei der Bildung der zusammengesetzten Zeichenfolge verwendeten ersten bzw. zweiten Zeichen wiedergegeben werden, in einer Speichereinrichtung 30 zu speichern. Dies wird weiter unten im Zusammenhang mit Figur 2 näher erläutert.

Das Wertdokumentbearbeitungssystem kann ferner eine oder mehrere, im vorliegenden Beispiel aus Anschaulichkeitsgründen nur schematisch angedeutete, Vorrichtungen 40 aufweisen, mittels welcher die Wertdokumente 1 befördert und/ oder gezählt und/ oder bezüglich Echtheit und/ oder Fitness geprüft und/ oder entsprechend sortiert werden können.

Figur 2 zeigt ein Schema zur Veranschaulichung eines Beispiels für die Bildung einer zusammengesetzten Zeichenfolge und eines entsprechenden Zeichenfolgenbildes .

Der obere Teil der Figur 2 zeigt ein Beispiel eines vom Wertdokument 1 aufgenommenen Bildes 4, in welchem u.a. die erste und zweite Zeichenfolge 2, 3 wiedergegeben werden. Ferner sind Teilbilder 4a und 4b aus dem Bild 4, in welchen die erste bzw. zweite Zeichenfolge 2 bzw. 3 wiedergegeben ist, vergrößert dargestellt.

Zu Veranschaulichungszwecken ist der Bildhintergrund des Teilbildes 4a mit der darin wiedergegebenen ersten Zeichenfolge 2 schraffiert und der Bildhintergrund des Teilbildes 4b mit der darin wiedergegebenen zweiten Zeichenfolge 2 gepunktet dargestellt.

Wie aus dem Bild 4 und den vergrößert dargestellten Teilbildern 4a und 4b ersichtlich ist, sind die im Bild 4 enthaltenen Zeichen der ersten und zweiten Zeichenfolge 2, 3 unterschiedlich gut lesbar bzw. erkennbar, was z.B. durch den Zustand des Wertdokuments 1 selbst und/ oder durch die Bilderfassung bedingt sein kann.

Im vorliegenden Beispiel ist die an der 6. Stelle der ersten Zeichenfolge 2 befindliche Ziffer "4" nur schlecht lesbar, was z.B. auf einen Abrieb von Druckfarbe der aufgedruckten ersten Zeichenfolge zurückzuführen sein kann. Auch die an der 3. bis 5. Stelle und 7. Stelle der zweiten Zeichenfolge 3 befindlichen Ziffern "123" bzw. "5" sind etwa aufgrund einer Verschmutzung bzw. eines Risses oder Knicks an der betreffenden Stelle des Wertdokuments 1 vergleichsweise schlecht lesbar.

Vorzugsweise ist die Auswertungseinrichtung 10 (siehe Figur 1) dazu eingerichtet, für die einzelnen Zeichen der ersten und zweiten Zeichenfolge 2, 3 eine Erkennbarkeitsinformation zu bestimmen, welche die Lesbarkeit bzw. Erkennbarkeit der im Bild 4 wiedergegebenen Zeichen charakterisiert. Die Erkennbarkeitsinformation kann z.B. bei der automatischen Text- bzw. Zeichenerkennung oder aber auch separat davon ermittelt werden. Es kann sich dabei z.B. um eine prozentuale Angabe handeln (z.B. 0 % für nicht lesbar bis 100 % für sehr gut lesbar).

Im vorliegenden Beispiel könnte die Erkennbarkeitsinformation für die neun Stellen bzw. Zeichen der ersten und zweiten Zeichenfolge 2, 3 etwa wie folgt aussehen:
Erste Zeichenfolge: 80 %, 82 %, 85 %, 87 %, 84 %, 32 %, 79 %, 82 %, 85 %.
Zweite Zeichenfolge: 95 %, 91 %, 50 %, 47 %, 51 %, 89 %, 56 %, 96 %, 94 %.

Vorzugsweise wird aus den erkannten ersten Zeichen der ersten Zeichenfolge 2 und den erkannten zweiten Zeichen der zweiten Zeichenfolge 3 eine zusammengesetzte Zeichenfolge 5 mit vorzugweise derselben Anzahl von Stellen gebildet, indem an die jeweilige Stelle der zusammengesetzten Zeichenfolge 5 das für diese Stelle ermittelte erste oder zweite Zeichen mit der besseren Erkennbarkeit, vorliegend also der höheren prozentualen Angabe, gesetzt wird.

Die Stellen 1 bis 9 der zusammengesetzten Zeichenfolge 5 werden im vorliegenden Beispiel vorzugsweise also wie folgt gebildet: 1. und 2. Stelle ("X" und "Y") der zweiten Zeichenfolge, 3. bis 5. Stelle ("123") der ersten Zeichenfolge, 6. Stelle ("4") der zweiten Zeichenfolge, 7. Stelle ("5") der ersten Zeichenfolge, 8. und 9. Stelle ("6A") der zweiten Zeichenfolge.

Grundsätzlich können alternativ oder zusätzlich zur Lesbarkeit bzw. Erkennbarkeit auch andere Kriterien bei der Entscheidung herangezogen werden, welche der erkannten ersten Zeichen der ersten Zeichenfolge 2 bzw. zweiten Zeichen der zweiten Zeichenfolge 3 bei der Bildung der zusammengesetzten Zeichenfolge 5 verwendet werden.

Die Auswertungseinrichtung 10 ist ferner dazu eingerichtet, analog zur Bildung der zusammengesetzten Zeichenfolge 5 ein Zeichenfolgenbild 6 unter Verwendung der Bildausschnitte 7, 8 des Bildes 4 bzw. der Teilbilder 4a, 4b zu generieren, in welchen die bei der Bildung der zusammengesetzten Zeichenfolge 5 verwendeten ersten bzw. zweiten Zeichen wiedergegeben sind.

Wie aufgrund des unterschiedlich dargestellten Bildhintergrundes (schraffiert bzw. gepunktet) in der Darstellung gut erkennbar ist, setzt sich das Zeichenfolgenbild 6 aus den ersten Bildausschnitten 7 ("1", "2", "3" und "5") und zweiten Bildausschnitten 8 ("X", "Y", "4", "6" und "A") zusammen, in welchen die bei der vorstehend beschriebenen Bildung der zusammengesetzten Zeichenfolge 5 verwendeten ersten bzw. zweiten Zeichen wiedergegeben sind. Die Reihenfolge der ersten und zweiten Bildausschnitte 7, 8 im zusammengesetzten Zeichenfolgenbild 6 ist vorzugsweise identisch mit der Reihenfolge der entsprechenden ersten und zweiten Zeichen in der zusammengesetzten Zeichenfolge 5.

Die auf diese Weise ermittelte zusammengesetzte Zeichenfolge 5 wird zusammen mit dem Zeichenfolgenbild 6 in einer Speichereinrichtung 30 gespeichert. In der vorliegenden Darstellung sind darüber hinaus Beispiele gespeicherter Zeichenfolgen (linke Spalte) und entsprechend zusammengesetzter Zeichenfolgenbilder (rechte Spalte) anderer Zeichenfolgen bzw. Seriennummern gezeigt.

Bei Bedarf, etwa bei Stichproben oder bei einer erforderlichen Nachprüfung, kann die betreffende zusammengesetzte Zeichenfolge 5 zusammen mit dem dazugehörigen Zeichenfolgenbild 6 abgerufen und z.B. auf einem Display oder Touchscreen angezeigt werden, so dass sie von einer Bedienperson miteinander verglichen werden können. Gegebenenfalls kann die gespeicherte Zeichenfolge 5 manuell korrigiert werden, z. B. mittels einer Tastatur oder des Touchscreens.

## Patentansprüche

1. Vorrichtung zur Bearbeitung von Wertdokumenten (1), insbesondere Banknoten, mit mindestens einer Bilderfassungseinrichtung (10), welche dazu eingerichtet ist, mindestens ein Bild (4) von mindestens zwei auf einem Wertdokument (1) befindlichen Zeichenfolgen (2, 3) zu erfassen, und einer Auswertungseinrichtung (20), welche dazu eingerichtet ist,
- in dem mindestens einen Bild (4) ein oder mehrere erste Zeichen, die in mindestens einer ersten Zeichenfolge (2) enthalten sind, und ein oder mehrere zweite Zeichen, die in mindestens einer zweiten Zeichenfolge (3) enthalten sind, zu erkennen,
- aus zumindest einem Teil der ersten Zeichen und zumindest einem Teil der zweiten Zeichen eine zusammengesetzte Zeichenfolge (5) zu bilden,
**dadurch gekennzeichnet, dass** die Auswerteeinrichtung eingerichtet ist, diejenigen Bildausschnitte (7, 8) aus dem mindestens einen Bild (4), in welchen die in der zusammengesetzten Zeichenfolge (5) enthaltenen ersten bzw. zweiten Zeichen wiedergegeben und die für die Bildung der zusammengesetzten Zeichenfolge (5) verwendet werden, zusammen mit der zusammengesetzten Zeichenfolge (5) in einer Speichereinrichtung (30) zu speichern.

2. Vorrichtung nach Anspruch 1, wobei die Auswertungseinrichtung (20) dazu eingerichtet ist, aus den Bildausschnitten (7, 8), in welchen die in der zusammengesetzten Zeichenfolge (5) enthaltenen ersten bzw. zweiten Zeichen wiedergegeben werden, ein Zeichenfolgenbild (6) zu bilden und das Zeichenfolgenbild (6) zusammen mit der zusammengesetzten Zeichenfolge (5) in der Speichereinrichtung (30) zu speichern.

3. Vorrichtung nach Anspruch 2, wobei die Auswertungseinrichtung (20) dazu eingerichtet ist, die Bildausschnitte (7, 8), in welchen die in der zusammengesetzten Zeichenfolge (5) enthaltenen ersten bzw. zweiten Zeichen wiedergegeben werden, im Zeichenfolgenbild (6) in einer Reihenfolge anzuordnen, welche der Reihenfolge der ersten bzw. zweiten Zeichen in der zusammengesetzten Zeichenfolge (5) entspricht.

4. Vorrichtung nach einem der vorangehenden Ansprüche, wobei die Auswertungseinrichtung (20) dazu eingerichtet ist, zumindest für einen Teil der ersten Zeichen und zumindest für einen Teil der zweiten Zeichen jeweils eine Erkennbarkeitsinformation zu ermitteln, welche die Erkennbarkeit der ersten und zweiten Zeichen in dem mindestens einen Bild (4) charakterisiert.

5. Vorrichtung nach Anspruch 4, wobei die Auswertungseinrichtung (20) dazu eingerichtet ist, die zusammengesetzte Zeichenfolge (5) aus zumindest einem Teil der ersten Zeichen und/oder zumindest einem Teil der zweiten Zeichen in Abhängigkeit von der jeweils für die ersten und zweiten Zeichen ermittelten Erkennbarkeitsinformation zu bilden.

6. Vorrichtung nach Anspruch 4 oder 5, wobei die Auswertungseinrichtung (20) dazu eingerichtet ist, die zusammen mit der zusammengesetzten Zeichenfolge (5) in der Speichereinrichtung (30) zu speichernden Bildausschnitte (7, 8) des mindestens einen Bildes (4) in Abhängigkeit von der jeweils für die ersten bzw. zweiten Zeichen, aus welchen die zusammengesetzte Zeichenfolge (5) gebildet wird bzw. wurde, ermittelten Erkennbarkeitsinformation zu ermitteln.

7. Vorrichtung nach einem der vorangehenden Ansprüche, wobei die Bilderfassungseinrichtung (10) dazu eingerichtet ist, das mindestens eine Bild (4) von mindestens zwei in unterschiedlichen Regionen auf dem Wertdokument (1) befindlichen Zeichenfolgen (2, 3) zu erfassen.

8. Vorrichtung nach einem der vorangehenden Ansprüche, wobei die erste und zweite Zeichenfolge (2, 3) identisch sind und die aus ersten und/oder zweiten Zeichen der ersten bzw. zweiten Zeichenfolge (2, 3) gebildete zusammengesetzte Zeichenfolge (5) mit der ersten und zweiten Zeichenfolge (2, 3) identisch ist.

9. Vorrichtung nach einem der vorangehenden Ansprüche, wobei die erste und zweite Zeichenfolge (2, 3) eine Seriennummer des Wertdokuments (1) enthalten und/oder bilden.

10. Wertdokumentbearbeitungssystem (10, 20, 30, 40) mit mindestens einer Vorrichtung (40) zum Befördern und/ oder Zählen und/ oder Prüfen und/ oder Sortieren von Wertdokumenten (1), insbesondere Banknoten, und einer Vorrichtung (10, 20) nach einem der vorangehenden Ansprüche.

11. Verfahren zur Bearbeitung von Wertdokumenten (1), insbesondere Banknoten, mit folgenden Schritten:
- Erfassen mindestens eines Bildes (4) von mindestens zwei auf einem Wertdokument (1) befindlichen Zeichenfolgen (2, 3),
- Erkennen von einem oder mehreren ersten Zeichen, die in mindestens einer ersten Zeichenfolge (2) enthalten sind, und einem oder mehreren zweiten Zeichen, die in mindestens einer zweiten Zeichenfolge (3) enthalten sind,
- Bilden einer zusammengesetzten Zeichenfolge (5) aus zumindest einem Teil der ersten Zeichen und zumindest einem Teil der zweiten Zeichen und **gekennzeichnet durch** den folgenden Schritt:
- Speichern von denjenigen Bildausschnitten (7, 8) aus dem mindestens einen Bild (4), in welchen die in der zusammengesetzten Zeichenfolge (5) enthaltenen ersten bzw. zweiten Zeichen wiedergegeben und die für die Bildung der zusammengesetzten Zeichenfolge (5) verwendet werden, zusammen mit der zusammengesetzten Zeichenfolge (5) in einer Speichereinrichtung (30).

## Claims

1. Apparatus for processing value documents (1), in particular banknotes, having at least one image capture device (10), which is designed to capture at least one image (4) of at least two character strings (2, 3) that are on a value document (1), and an evaluation device (20), which is designed
- to recognize in the at least one image (4) one or more first characters contained in at least one first character string (2) and one or more second characters contained in at least one second character string (3),
- to form a compiled character string (5) from at least some of the first characters and at least some of the second characters,
**characterized in that** the evaluation device is designed to store those image portions (7, 8) from the at least one image (4) that render the first and second characters contained in the compiled character string (5), and that are used to form the compiled character string (5), in a memory device (30) together with the compiled character string (5).

2. Apparatus according to Claim 1, wherein the evaluation device (20) is designed to form a character string image (6) from the image portions (7, 8) that render the first and second characters contained in the compiled character string (5) and to store the character string image (6) in the memory device (30) together with the compiled character string (5).

3. Apparatus according to Claim 2, wherein the evaluation device (20) is designed to arrange the image portions (7, 8) that render the first and second characters contained in the compiled character string (5) in the character string image (6) in an order that corresponds to the order of the first and second characters in the compiled character string (5).

4. Apparatus according to one of the preceding claims, wherein the evaluation device (20) is designed to determine for each of at least some of the first characters and for each of at least some of the second characters a piece of recognizability information that characterizes the recognizability of the first and second characters in the at least one image (4).

5. Apparatus according to Claim 4, wherein the evaluation device (20) is designed to form the compiled character string (5) from at least some of the first characters and/or at least some of the second characters on the basis of the recognizability information determined for each of the first and second characters.

6. Apparatus according to Claim 4 or 5, wherein the evaluation device (20) is designed to determine the image portions (7, 8) of the at least one image (4) that are to be stored in the memory device (30) together with the compiled character string (5) on the basis of the recognizability information determined for each of the first and second characters from which the compiled character string (5) is formed.

7. Apparatus according to one of the preceding claims, wherein the image capture device (10) is designed to capture the at least one image (4) of at least two character strings (2, 3) that are in different regions on the value document (1).

8. Apparatus according to one of the preceding claims, wherein the first and second character strings (2, 3) are identical and the compiled character string (5) formed from first and/or second characters of the first and second character strings (2, 3) is identical to the first and second character strings (2, 3).

9. Apparatus according to one of the preceding claims, wherein the first and second character strings (2, 3) contain and/or form a serial number of the value document (1) .

10. Value document processing system (10, 20, 30, 40) having at least one apparatus (40) for conveying and/or counting and/or testing and/or sorting value documents (1), in particular banknotes, and an apparatus (10, 20) according to one of the preceding claims.

11. Method for processing value documents (1), in particular banknotes, having the following steps:
- capturing at least one image (4) of at least two character strings (2, 3) that are on a value document (1),
- recognizing one or more first characters contained in at least one first character string (2) and one or more second characters contained in at least one second character string (3),
- forming a compiled character string (5) from at least some of the first characters and at least some of the second characters,
**characterized by** the following step:
storing those image portions (7, 8) from the at least one image (4) that render the first and second characters contained in the compiled character string (5), and that are used to form the compiled character string (5), in a memory device (30) together with the compiled character string (5).

## Revendications

1. Dispositif de traitement de documents de valeur (1), notamment de billets de banque, ledit dispositif comprenant au moins un module de capture d'images (10), qui est conçu pour capturer au moins une image (4) d'au moins deux chaînes de caractères (2, 3) situées sur un document de valeur (1), et un module d'évaluation (20) qui est conçu pour
- reconnaître dans l'au moins une image (4) un ou plusieurs premiers caractères qui sont contenus dans au moins une première chaîne de caractères (2) et un ou plusieurs deuxièmes caractères qui sont contenus dans au moins une deuxième chaîne de caractères (3),
- former une chaîne de caractères composée (5) à partir d'au moins une partie des premiers caractères et d'au moins une partie des deuxièmes caractères,
**caractérisé en ce que** le module d'évaluation est conçu pour mémoriser les portions d'image (7, 8) de l'au moins une image (4) dans lesquelles les premiers et deuxièmes caractères contenus dans la chaîne de caractères composée (5) sont reproduits et qui sont utilisées pour former la chaîne de caractères composée (5), conjointement avec la chaîne de caractères composée (5) dans un module de mémorisation (30).

2. Dispositif selon la revendication 1, le module d'évaluation (20) étant conçu pour former une image de chaîne de caractères (6) à partir des portions d'image (7, 8) dans lesquelles les premiers ou deuxièmes caractères contenus dans la chaîne de caractères composée (5) sont reproduits, et pour mémoriser l'image de chaîne de caractères (6) conjointement avec la chaîne de caractères composée (5) dans le module de mémorisation (30).

3. Dispositif selon la revendication 2, le module d'évaluation (20) étant conçu pour disposer les portions d'image (7, 8), dans lesquelles les premiers et deuxièmes caractères contenus dans la chaîne de caractères composée (5) sont reproduits, dans l'image de chaîne de caractères (6) suivant un ordre qui correspond à l'ordre des premiers et deuxièmes caractères dans la chaîne de caractères composée (5).

4. Dispositif selon l'une des revendications précédentes, le module d'évaluation (20) étant conçu pour déterminer une information de capacité de reconnaissance pour au moins une partie des premiers caractères et au moins au moins une partie des deuxièmes caractères, laquelle information caractérise la capacité de reconnaissance des premiers et deuxièmes caractères dans au moins une image (4).

5. Dispositif selon la revendication 4, le module d'évaluation (20) étant conçu pour former la chaîne de caractères composée (5) à partir d'au moins une partie des premiers caractères et/ou d'au moins une partie des deuxièmes caractères en fonction de l'information de capacité de reconnaissance déterminée à chaque fois pour les premiers et deuxièmes caractères.

6. Dispositif selon la revendication 4 ou 5, le module d'évaluation (20) étant conçu pour déterminer des portions d'image (7, 8) de l'au moins une image (4), lesquelles doivent être mémorisées conjointement avec la chaîne de caractères composée (5) dans le module de mémorisation (30), en fonction de l'information de capacité de reconnaissance déterminée pour les premiers ou deuxièmes caractères respectifs à partir desquels la chaîne de caractères composée (5) est ou a été formée.

7. Dispositif selon l'une des revendications précédentes, le module de capture d'images (10) étant conçu pour capturer l'au moins une image (4) d'au moins deux chaînes de caractères (2, 3) situées dans des régions différentes sur le document de valeur (1).

8. Dispositif selon l'une des revendications précédentes, les première et deuxième chaînes de caractères (2, 3) étant identiques et la chaîne de caractères composée (5), formée des premiers et/ou deuxièmes caractères de la première ou deuxième chaîne de caractères (2, 3), étant identique aux première et deuxième chaînes de caractères (2, 3).

9. Dispositif selon l'une des revendications précédentes, les première et deuxième chaînes de caractères (2, 3) contenant et/ou formant un numéro de série du document de valeur (1).

10. Système de traitement de documents de valeur (10, 20, 30, 40) comprenant au moins un dispositif (40) destiné à transporter et/ou compter et/ou contrôler et/ou trier des documents de valeur (1), en particulier des billets de banque, et un dispositif (10, 20) selon l'une des revendications précédentes.

11. Procédé de traitement de documents de valeur (1), notamment de billets de banque, ledit procédé comprenant les étapes suivantes :
- capturer au moins une image (4) d'au moins deux chaînes de caractères (2, 3) situées sur un document de valeur (1),
- reconnaître un ou plusieurs premiers caractères contenus dans au moins une première chaîne de caractères (2) et un ou plusieurs deuxièmes caractères contenus dans au moins une deuxième chaîne de caractères (3),
- former une chaîne de caractères composée (5) à partir d'au moins une partie des premiers caractères et d'au moins une partie des deuxièmes caractères et **caractérisé par** l'étape suivante :
- mémoriser les portions d'image (7, 8) de l'au moins une image (4), dans lesquelles les premiers et deuxièmes caractères contenus dans la chaîne de caractères composée (5) sont reproduits et qui sont utilisées pour former la chaîne de caractères composée (5), conjointement avec la chaîne de caractères composée (5) dans un module de mémorisation (30).
